(19) Europäisches Patentamt / European Patent Office / Office européen des brevets

(11) **EP 4 535 164 B1**

(12) **FASCICULE DE BREVET EUROPEEN**

(45) Date de publication et mention de la délivrance du brevet:
**29.07.2026 Bulletin 2026/31**

(21) Numéro de dépôt: **23306683.6**

(22) Date de dépôt: **02.10.2023**

(51) Classification Internationale des Brevets (IPC):
**G06F 8/71** *(2018.01)* **G06F 9/445** *(2018.01)*
**G06N 20/00** *(2019.01)* G06F 16/332 *(2025.01)*
G06F 11/07 *(2006.01)* G06F 11/30 *(2006.01)*
G06N 3/0475 *(2023.01)* G06N 3/092 *(2023.01)*

(52) Classification Coopérative des Brevets (CPC):
**G06F 9/44505; G06F 8/71; G06F 11/0793; G06N 20/00;** G06N 3/0475; G06N 3/092

(54) **PROCEDE ET DISPOSITIF DE GENERATION D'UNE RECOMMANDATION DE CORRECTION D'UN FICHIER DE CONFIGURATION D'UN ENVIRONNEMENT INFORMATIQUE**

VERFAHREN UND VORRICHTUNG ZUR ERZEUGUNG EINER KORREKTUREMPFEHLUNG EINER KONFIGURATIONSDATEI EINER RECHNERUMGEBUNG

METHOD AND DEVICE FOR GENERATING A RECOMMENDATION FOR CORRECTING A CONFIGURATION FILE OF A COMPUTER ENVIRONMENT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(43) Date de publication de la demande:
**09.04.2025 Bulletin 2025/15**

(73) Titulaire: **ATOS FRANCE**
**95870 Bezons (FR)**

(72) Inventeur: **LECROART, YANNICK**
**34280 La Grande Motte (FR)**

(74) Mandataire: **Novagraaf Technologies**
**2 rue Sarah Bernhardt**
**CS90017**
**92665 Asnières-sur-Seine Cedex (FR)**

(56) Documents cités:
WO-A1-2022/093239 US-A1- 2022 156 121
US-A1- 2022 308 952 US-A1- 2023 022 222

• PETROVIC NENAD: "Machine Learning-Based Run-Time DevSecOps: ChatGPT Against Traditional Approach", 2023 10TH INTERNATIONAL CONFERENCE ON ELECTRICAL, ELECTRONIC AND COMPUTING ENGINEERING (ICETRAN), IEEE, 5 June 2023 (2023-06-05), pages 1 - 5, XP034386692, [retrieved on 20230728], DOI: 10.1109/ICETRAN59631.2023.10192161

EP 4 535 164 B1

## Description

### Domaine Technique

L'invention concerne le domaine technique de la gestion d'une infrastructure d'un environnement informatique, en particulier d'une infrastructure déployée automatiquement par un programme informatique.

Elle s'applique, en particulier, à la correction de la configuration de l'approvisionnement d'une telle infrastructure.

### Etat de la technique antérieure

L'Infrastructure-as-Code (IaC) consiste à gérer et à approvisionner une infrastructure à l'aide de lignes de code de programme informatique plutôt que par des processus manuels.

L'IaC implique la création de fichiers de configuration, ou scripts, qui contiennent les caractéristiques de l'infrastructure, ce qui facilite les modifications et la distribution des configurations. L'IaC permet également de s'assurer que le même environnement est fourni à chaque fois que le programme informatique de configuration est utilisé. En codifiant et en documentant les caractéristiques de configuration, l'IaC facilite la gestion des configurations et permet notamment d'éviter des changements de configuration ad hoc non documentés.

Le contrôle des versions est une partie importante de l'IaC : les fichiers de configuration doivent être gérés par un système de contrôle de source comme n'importe quel autre fichier de code source de logiciel. Le déploiement de type IaC permet également de scinder l'infrastructure en modules qui peuvent ensuite être combinés de différentes façons, de manière automatisée.

L'infrastructure-as-Code permet ainsi de résoudre des problématiques telles que la gestion efficace de l'infrastructure, l'automatisation du déploiement, la gestion du versionnage, la scalabilité, l'évolutivité, la cohérence et la conformité. Elle contribue à accroître l'efficacité opérationnelle, à réduire les erreurs humaines et à faciliter la collaboration entre les équipes responsables de la gestion de l'infrastructure.

Toutefois, il arrive, par des erreurs humaines, que les scripts permettant de provisionner des environnements ou de déployer des applications et services contiennent des vulnérabilités, failles de sécurité ou des non-conformités avec des bonnes pratiques internes ou industrielles. Pour cette raison, des outils de test de sécurité, tels que les outils de tests statiques de sécurité des applications, appelés SAST (en anglais, « Static Application Security Testing ») et les outils de tests dynamiques de sécurité des applications, appelés DAST (en anglais, « Dynamic Application Security Testing ») permettent de déceler les failles courantes au niveau du code source applicatif, avant la compilation d'une version, ou d'examiner les problèmes de configuration d'une application/service en cours d'exécution sur un environnement actif.

Si ces deux outils de SAST et DAST sont régulièrement utilisés en tandem et permettent d'extraire et de faire ressortir des anomalies de sécurité, il n'empêche tout de même qu'il reste à la charge des développeurs/architectes logiciels d'appliquer les recommandations/modifications proposées par ces outils, en modifiant de manière manuelle le fichier/script de configuration concerné par la faille de sécurité.

Ce travail peut être long et fastidieux en fonction de la dimension des projets et du nombre de services déployés et en opération. Il peut aussi vite s'avérer chronophage et répétitif lorsque la mise à l'échelle est un impératif.

Par ailleurs, les outils de SAST et DAST sont nombreux et ne sont pas standardisés, si bien qu'ils ne décrivent pas les failles de sécurité ou problèmes de configuration de la même manière. Il en résulte que lorsqu'une entreprise fait le choix de remplacer un outil par un autre, les équipes de développeurs/architectes en interne doivent s'adapter à chaque terminologie lors de la mise en place des correctifs au niveau des scripts d'IaC.

Même lorsqu'une entreprise fait le choix de n'utiliser qu'un seul outil et de le maintenir au fil du temps, il reste que les mises à jour de cet outil, par exemple pour s'adapter à de nouvelles menaces ou normes de sécurité (par l'ajout de nouvelles règles ou paramètres dans la base de connaissances), sont à prendre en compte manuellement.

Le document US 2022/156121 A1 décrit un système et une méthode comprenant la détermination d'une ou plusieurs anomalies dans une application et l'émission d'une ou plusieurs recommandations à l'intention de dispositifs d'utilisateur 108 pour résoudre la ou les anomalies. Le document US 2023/022222 A1 décrit une solution automatisée de détection et de résolution de problèmes sur des systèmes utilisateurs à l'aide de techniques de guérison en tant que service (« healing as a service »). Le document WO 2022/093239 A1 décrit un système de prévention automatique d'incidents qui utilise l'apprentissage automatique et le traitement du langage naturel (NLP) pour effectuer une analyse des causes profondes de ces incidents. Le document D4 (Petrović Nenad, "Machine Learning-Based Run-Time DevSecOps: ChatGPT Against Traditional Approach", 2023 10TH INTERNATIONAL CONFERENCE ON ELECTRICAL, ELECTRONIC AND COMPUTING ENGINEERING (ICETRAN), IEEE, 5 juin 2023, pages 1-5, DOI: 10.1109/ICETRAN59631.2023.10192161) propose d'utiliser un modèle de langage massif pour analyser des journaux de serveurs sous forme de questions-réponses, afin de détecter des activités suspectes. Le document US 2022/308952 A1 décrit une méthode de correction de demandes de service qui utilise le traitement du langage naturel et un modèle de langage de type transformeur pour analyser des journaux et identifier des segments à risque.

Ainsi, il existe un besoin d'automatisation d'une correction de l'Infrastructure-as-Code une fois que les analyses de sécurité et conformité ont été réalisées sur le code source et sur les applications en opération. Il est également primordial de pouvoir automatiser l'adaptation aux mises à jour des outils de tests SAST et DAST ou à leur remplacement.

**Résumé de l'invention**

La présente invention vient améliorer la situation.

L'invention est exposée dans le jeu de revendications joint. Selon un premier aspect, il est proposé un procédé de génération d'une recommandation de correction d'un fichier de configuration d'une infrastructure d'un environnement informatique au sein duquel s'exécutent des services, ladite infrastructure ayant été déployée automatiquement à partir dudit fichier de configuration, tel que défini dans la revendication 1.

L'invention propose ainsi une approche tout-à-fait nouvelle et inventive de la gestion d'un environnement informatique dont l'infrastructure a été déployée à l'aide d'instructions de code de programme, selon une technique d'Infrastructure-as-Code IaC. Elle s'appuie sur un module d'intelligence artificielle générative dont le modèle prédictif, de type Modèle de Langage massif, a été entraîné pour réaliser des tâches d'agent conversationnel, et propose une solution pour interroger ce modèle de sorte à obtenir automatiquement une recommandation de correction du fichier de configuration défaillant.

Selon des exemples de réalisation, ce procédé peut comprendre d'autres caractéristiques, prises seules ou en combinaison, qui sont présentés ci-après.

Selon un ou plusieurs exemples de réalisation, le procédé comprend la génération d'une requête d'obtention de ladite question à partir d'une question standard préconstruite et desdits attributs, la présentation, de ladite requête en entrée dudit module d'intelligence artificielle lors d'une première interaction avec le module d'intelligence artificielle et l'obtention de ladite question en sortie du module.

Une première interaction avec le modèle d'intelligence artificielle générative permet ainsi d'obtenir la question de la requête de correction (correspondant à une deuxième interaction).

Selon un ou plusieurs exemples, cette première interaction est basée sur une question préconstruite et standard qui est complétée en insérant ledit au moins un attribut extrait et des informations de contexte.

Un avantage de faire construire la question à l'IA générative est d'augmenter les chances qu'elle soit compréhensible pour elle et conduise à une réponse satisfaisante.

Selon un ou plusieurs exemples de réalisation, le procédé comprend l'extraction de mots clés desdits attributs du rapport d'exécution et l'obtention d'informations de contexte additionnelles par interrogation d'au moins une table de données, comprenant des entrées associant à au moins undit mot clé des informations de contexte de l'environnement informatique.

Un avantage est d'obtenir des informations de contexte spécifique à l'anomalie détectée pour l'environnement informatique en opération.

Selon un ou plusieurs exemples de réalisation, les informations de contexte additionnelles appartiennent à un groupe comprenant au moins :

- le fichier de configuration ayant généré l'anomalie,
- des informations relatives à une politique de sécurité applicable à l'environnement informatique,
- un ou plusieurs exemples de requêtes/recommandations de correction précédemment obtenus.

Selon un exemple de réalisation, unedite table de données, dite base de connaissance est une base de données vectorielle, associant à une ou plusieurs métadonnées un ou plusieurs vecteurs représentatifs d'un document de description d'une politique de sécurité applicable à l'environnement informatique. Cet encodage des informations de contexte permet de compresser les informations stockées. Un avantage est de pouvoir présenter au module d'IA générative des éléments de contexte comprenant des documents de taille plus élevée sans dépasser les limites de taille de la requête fixées pour le module d'IA générative.

Selon un autre exemple, une dite table de données est une table de données associée à un type d'anomalie, par exemple une table Q comprenant un ou plusieurs exemples de requêtes/recommandations de correction précédemment obtenus, undit exemple étant associé à un score attribué par un module d'apprentissage par renforcement.

Selon un ou plusieurs exemples de réalisation, le procédé comprend l'obtention d'exemples de requêtes d'obtention d'une recommandation de correction par interrogation d'un module d'apprentissage par renforcement, ledit module étant configuré pour choisir au moins un exemple de requête d'obtention d'une recommandation de correction dans une table de données relative à un type de l'anomalie, ladite table comprenant des exemples de requête d'obtention d'une recommandation de correction ayant abouti à l'obtention de recommandations de correction d'une anomalie dudit type, validées par l'utilisateur et associés à un score, en fonction dudit score.

Par exemple, le module d'apprentissage par renforcement est configuré pour mettre en œuvre une stratégie d'optimisation, ce qui le conduit à répondre avec le ou les exemples associés aux meilleurs scores.

Selon un ou plusieurs exemples de réalisation, le procédé comprend la lecture préalable d'un document, ou plan de gouvernance, comprenant des informations relatives appartenant à groupe comprenant :

- des informations relatives à un format du rapport d'exécution,

- des informations relatives audit au moins un attribut de l'anomalie à extraire du rapport d'exécution,
- des informations relatives à la mesure de similarité et audit seuil d'acceptabilité à mettre en œuvre pour la validation de la recommandation de correction du fichier de configuration. De la sorte, le procédé est capable de s'adapter à des changements d'outils de détection d'anomalies, de formats des rapports d'exécution, et plus généralement à de nouvelles contraintes de mise en œuvre.

Selon un ou plusieurs exemples de réalisation, la soumission de la recommandation de correction comprend une demande de mise à jour, ou demande de tirage, du fichier de configuration, dans un référentiel de gestion du code source, conformément à la recommandation de correction.

La recommandation de correction comprend une version corrigée du fichier de configuration ayant généré l'anomalie, prête à remplacer la version antérieure défaillante.

Selon un ou plusieurs exemples de réalisation, le procédé comprend comprend l'obtention d'un résultat d'évaluation de la recommandation de correction par un utilisateur, et, en fonction du résultat d'évaluation obtenu, le déclenchement ou non d'une mise à jour (E11) du fichier de configuration (SCP) conformément à la recommandation de correction.

En cas de validation, la demande de tirage est envoyée au référentiel de gestion di code source, afin que la correction du code source soit faite automatiquement. Par exemple, la branche principale du code source, c'est-à-dire celle qui est en opération, est remplacée par une nouvelle branche comprenant le fichier de configuration corrigé.

Selon un ou plusieurs exemples de réalisation, le procédé comprend, en cas de déclenchement de la mise à jour du fichier de configuration, l'enregistrement de la requête d'obtention d'une recommandation et la recommandation de correction comme exemple dans une table de données relative à un type de l'anomalie, en association avec un score.

Par exemple, le score associé est déterminé en fonction d'une note attribuée par l'utilisateur lors de la validation. Selon un autre exemple, le score associé correspond à la note attribuée par l'utilisateur.

Corrélativement, selon un deuxième aspect, il est proposé un dispositif de génération d'une recommandation de correction d'un fichier de configuration d'une infrastructure d'un environnement informatique au sein duquel s'exécutent des services, ladite infrastructure ayant été déployée automatiquement à partir dudit fichier de configuration, tel que défini dans la revendication 10.

Selon un ou plusieurs exemples de réalisation, le dispositif comprend :

- au moins un processeur ; et

- au moins une mémoire comprenant un code de programme informatique, la au moins une mémoire et le code de programme informatique étant configurés pour, avec l'au moins un processeur, provoquer l'exécution dudit dispositif.

Selon un ou plusieurs exemples de mise en œuvre, le dispositif précité est configuré pour mettre en œuvre le procédé selon le premier aspect, dans ses différents modes de réalisation.

Corrélativement, selon un ou plusieurs exemples de réalisation, le dispositif précité est intégré dans une plateforme de gestion du déploiement d'une infrastructure d'environnement informatique à l'aide d'instructions de code de programme comprenant un dispositif de génération d'une recommandation de correction d'une configuration selon le deuxième aspect

Selon un ou plusieurs exemples de mise en œuvre, la plateforme de gestion comprend au moins une mémoire comprenant une table de données ou base de connaissances, comprenant des entrées, une dite entrée associant à au moins un mot clé des informations de contexte additionnelles.

Selon un ou plusieurs exemples de mise en œuvre, ladite au moins une mémoire comprend en outre au moins une table de données relative à un type de l'anomalie, ladite table comprenant des exemples de requête d'obtention d'une recommandation de correction ayant abouti à l'obtention de recommandations de correction d'une anomalie dudit type, validées par l'utilisateur, associés à un score, et la plateforme comprend en outre un module d'apprentissage par renforcement configuré pour choisir au moins un exemple de requête d'obtention d'une recommandation de correction dans une table de données relative à un type de l'anomalie, en fonction dudit score, en réponse à une requête d'obtention d'informations de contexte additionnelles reçue du dispositif selon le deuxième aspect.

L'invention concerne aussi un produit programme d'ordinateur comportant des instructions pour l'exécution du procédé précité.

L'invention concerne enfin un support d'enregistrement lisible par un ordinateur sur lequel est enregistré le programme d'ordinateur précité.

Bien sûr les modes de réalisations qui viennent d'être présentés peuvent être combinés entre eux.

## Brève description des figures

D'autres caractéristiques et avantages de l'invention apparaîtront à l'examen de la description détaillée ci-après, et des dessins annexés, sur lesquels :

[Fig. 1] illustre schématiquement un exemple d'architecture globale d'une plateforme de gestion d'un environnement informatique comprenant un dispositif de génération d'une recommandation de correction d'une anomalie détectée dans la configuration de cet environnement, selon un ou plusieurs modes de réalisation,

[Fig. 2] illustre sous forme de logigramme les étapes d'un procédé de génération d'une recommandation de correction d'une anomalie détectée dans la configuration d'un environnement informatique, selon un premier exemple de mise en oeuvre,

[Fig. 3] détaille les étapes du procédé de génération d'une recommandation de correction d'une anomalie, selon un autre exemple de mise en oeuvre,

[Fig. 4] illustre schématiquement un exemple d'interactions du dispositif de génération d'une recommandation de correction avec un module d'intelligence artificielle générative selon un ou plusieurs modes de réalisation,

[Fig. 5] illustre schématiquement un exemple de structure fonctionnelle d'un module d'apprentissage par renforcement mis en oeuvre par la plateforme de gestion d'un environnement selon un ou plusieurs modes de réalisation, et

[Fig. 6] illustre schématiquement un exemple de structure matérielle d'un dispositif de génération d'une recommandation de correction d'une anomalie détectée dans la configuration d'un environnement informatique, selon un ou plusieurs modes de réalisation.

**Description détaillée de l'invention**

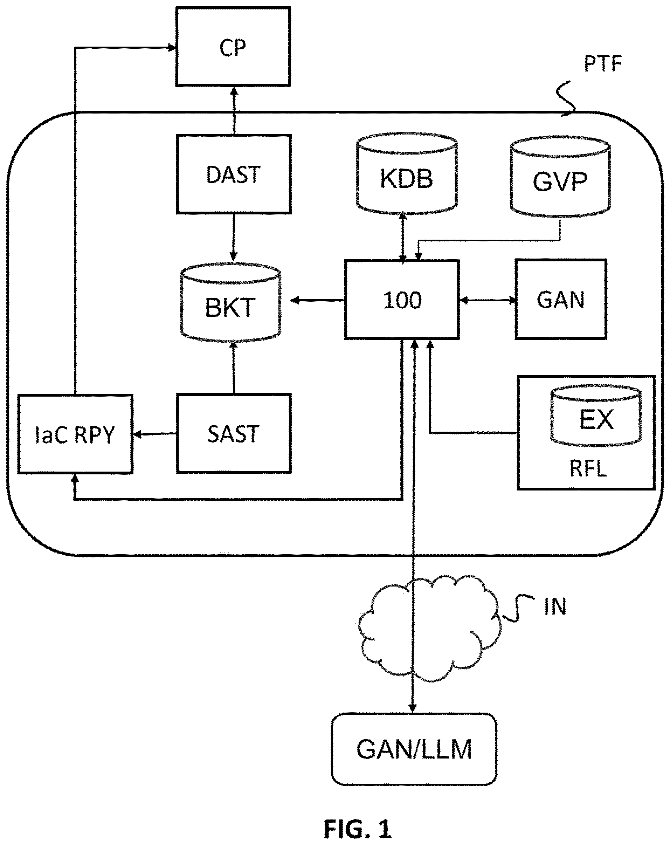

En relation avec la FIG. 1, on présente un exemple d'architecture globale d'une plateforme PTF de gestion d'une infrastructure d'un environnement informatique à l'aide d'un ensemble de programmes informatiques d'IaC. Par exemple, l'environnement informatique en question est un environnement informatique distribué en nuage (de l'anglais, « cloud »). On suppose ici que cet environnement est construit à partir d'éléments d'infrastructures et de ressources fournis par un fournisseur CP de cloud, public ou privé, en vue de réaliser un projet informatique, tel que par exemple l'environnement informatique d'une entreprise. La plateforme PTF comprend plusieurs composants qui interagissent entre eux pour permettre la gestion de cette infrastructure et son évolution au cours du temps.

Un premier composant est un dépôt ou référentiel de code source IaC RPY (de l'anglais, « repository »). En informatique, un dépôt ou référentiel est un stockage centralisé et organisé de données, comprenant une ou plusieurs bases de données où les fichiers de code source sont localisés en vue de leur distribution sur le réseau ou bien un endroit directement accessible aux utilisateurs. Le référentiel IaC RPY permet notamment de gérer l'archivage de différentes versions d'un code source. En l'espèce, ce dépôt contient, dans une branche principale, les fichiers de code source d'Infrastructure-as-Code qui ont été utilisés pour provisionner l'infrastructure de l'environnement informatique, ainsi que les services à déployer. On suppose ici que le déploiement s'est opéré successivement à un stade de développement, puis de test, et enfin de production.

La plateforme PTF héberge aussi des outils de sécurité d'analyse statique SAST et dynamique DAST configurés pour effectuer des vérifications sur le code source qui permet la configuration et l'approvisionnement des ressources de l'environnement informatique et sur les services déployés et en opération lorsque l'environnement informatique est actif. Une fois l'environnement informatique déployé en production, les outils de sécurité SAST et DAST s'exécutent de manière continue pour superviser l'exécution des services dans cet environnement informatique et vérifier la bonne conformité des services en opération avec une politique de sécurité de l'entreprise et, par conséquent celles des scripts de code source de configuration de l'infrastructure sous-jacente. Ces outils de sécurité génèrent des journaux (en anglais, « logs ») contenant les anomalies détectées. Les journaux générés sont stockés dans une mémoire, par exemple un espace de stockage non relationnel de type seau (en anglais, « bucket ») BKT, par exemple de type S3, pour Service de Stockage Simple qui est un service en ligne de stockage de fichiers proposé par Amazon AWS®. Ces journaux seront ensuite consommés par d'autres composants de la plateforme PTF, qui vont maintenant être présentés.

Selon l'exemple de la FIG. 1, la plateforme PTF comprend aussi une table de données, ou base de connaissances KDB, comprenant des informations relatives aux différents outils d'analyse de sécurité (statiques ou dynamiques) et plus généralement des informations de contexte spécifique à l'environnement informatique. La base de connaissances KDB est stockée dans une mémoire de la plateforme PTF.

La plateforme PTF comprend aussi un dispositif 100 de génération d'une recommandation de correction d'une anomalie de configuration d'une infrastructure d'un environnement informatique au sein duquel s'exécutent des services, ladite infrastructure ayant été déployée automatiquement à partir des fichiers de configuration IaC, stockés dans l'entrepôt de référence. Le dispositif 100 comprend des moyens pour l'obtention et le stockage en mémoire d'un rapport d'exécution comprenant une anomalie détectée lors de l'exécution d'un dit service, la présentation d'une requête de correction de l'anomalie en entrée d'un module d'intelligence artificielle générative GAN/LLM mettant en œuvre un modèle prédictif, préalablement entraîné, ladite requête de correction comprenant au moins une question formulée en langage naturel et des informations de contexte de l'anomalie, et l'obtention en sortie d'une recommandation de correction du fichier de configuration, la validation de la recommandation de correction du fichier de configuration comprenant la détermination d'une mesure de similarité par rapport auxdites informations de contexte et la comparaison à un seuil d'acceptabilité ; et lorsque la mesure de similarité est supérieure au seuil d'acceptabilité, la soumission de la recommandation de correction du fichier de configuration pour validation par un superviseur.

Le module d'intelligence artificielle GAN/LLM comprend par exemple un ou plusieurs réseaux de neurones profonds mettant en œuvre un modèle d'intelligence artificielle générative GAN, par exemple de type modèle massif de langage LLM (en anglais, « Large Language Model »), un tel module étant entraîné sur de grandes quantités de texte non étiqueté utilisant l'apprentissage auto-supervisé ou l'apprentissage semi-supervisé. Un modèle LLM est souvent utilisé pour la mise en œuvre d'agents conversationnels. Il est généralement distant, et accessible par exemple via Internet. Il n'a donc pas du tout été entraîné dans un contexte spécifique à l'environnement informatique géré par la plateforme PTF.

La plateforme PTF comprend donc des moyens de communication (non représentés) par l'intermédiaire desquels elle accède au module GAN/LLM.

Selon un ou plusieurs exemples de réalisation, elle comprend également un module RFL d'apprentissage par renforcement configuré pour fournir des exemples de requêtes/recommandations de correction précédemment obtenus par le dispositif 100, et stockés dans une ou plusieurs tables de données TBQ en association avec un score (ou récompense), en vue de leur utilisation comme informations de contexte à présenter dans la requête au module GAN/LLM.

La plateforme PTF comprend enfin un ou plusieurs espaces de stockage ou mémoires dans lesquels sont stockés notamment le dépôt RPY IAC, la base de connaissances KDB, la ou les tables de données TBQ comprenant les exemples de requêtes/recommandations de correction. Selon un ou plusieurs exemples de réalisation, la plateforme PTF stocke aussi dans une de ces mémoires, des informations de spécification du fonctionnement et des interactions entre les différents composants de la plateforme qui viennent d'être présentés, par exemple au sein d'un document ou fichier, appelé plan de gouvernance GVP.

Dans l'exemple de la FIG. 1, le dispositif 100 est intégré dans la plateforme PTF de gestion de l'environnement informatique. En variante, il peut être externe à la plateforme PTF mais connectée à elle via des moyens de communication.

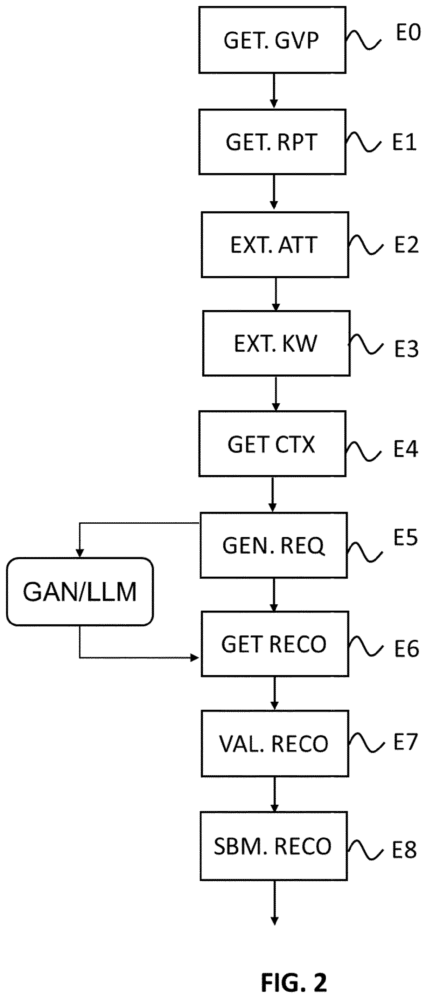

Selon un ou plusieurs exemples, le dispositif 100 met en œuvre un procédé de génération d'une recommandation de correction d'une anomalie qui va maintenant être décrit en relation avec la FIG. 2. On considère ici un environnement informatique déployé par l'exécution de fichiers de code source de configuration IaC, maintenant en production, dans lequel au moins une anomalie a été détectée lors de l'exécution d'un service donné.

En E0, le plan de gouvernance GVP est obtenu et lu. Il comprend des informations de spécification des interfaces des modules de la plateforme PTF avec lesquels le dispositif 100 est configuré pour interagir. Selon un ou plusieurs exemples de réalisation, le plan de gouvernance comprend des informations relatives appartenant à groupe comprenant :

- des informations relatives à un format du rapport d'erreur,
- des informations relatives à au moins un attribut à extraire du rapport d'exécution,
- des informations relatives à un nombre d'attributs à extraire du rapport d'exécution,
- des informations relatives à un algorithme d'extraction de mots clés dans lesdits attributs,
- des informations relatives à un nombres de mots clés à extraire desdits attributs,
- un nombre d'exemples de requêtes/recommandations à obtenir,
- des informations relatives à la mesure de similarité et audit seuil d'acceptabilité à mettre en œuvre pour la validation de la recommandation de correction du fichier de configuration, et
- des informations relatives à un ou plusieurs rôles qu'il peut être demandé au module d'IA générative GAN/LLM d'endosser dans une requête d'obtention d'une recommandation de correction. Ces rôles sont par exemples associés à des documents d'entreprise permettant de fournir des informations de contexte additionnelles au GAN/LLM. Par exemple, tout document de type politique de sécurité sera associé à un rôle de responsable de la sécurité entreprise, tandis qu'un document de type convention de nommage sera associé à un rôle de responsable de développement informatique, etc.

Un exemple de plan de gouvernance est fourni en annexe.

Dans l'exemple de l'annexe, il comprend en particulier des informations relatives aux outils de détection d'anomalie SAST et DAST. Il s'agit notamment du nom de l'outil, des attributs ou champs d'information à extraire des fichiers de rapports d'exécution LOG produits par chacun de ces outils et d'un format de ces fichiers. Par exemple, l'outil SAST utilisé est l'outil « KICS », le fichier de rapport d'exécution LOG qu'il produit est de type (ou format) JSON et les attributs à en extraire comprennent un type d'anomalie, « category », et une description de l'anomalie, « description ». Un avantage d'un tel document est qu'il regroupe toutes les informations pour permettre au dispositif 100 d'interagir avec les autres modules de la plateforme PTF et, du fait que le dispositif 100 s'y réfère, il permet au dispositif 100 de s'adapter à des évolutions de outils et des formats au cours du temps.

Au cours d'une étape E1, un rapport d'exécution LOG est obtenu, par exemple par lecture dans une mémoire, par exemple dans l'espace de stockage BKT. Il comprend au moins une anomalie détectée par l'outil de sécurité SAST ou DAST lors de l'exécution du service. Il s'agit par exemple d'une anomalie de sécurité, par exemple une anomalie de conformité par rapport aux spécifications d'une politique de sécurité donnée, applicable à l'environnement informatique.

A titre d'exemples non limitatifs, une telle anomalie peut concerner :

- une absence de définition, dans un fichier de type dockerfile, d'instruction d'un utilisateur (« User instruction ») ayant des droits limités, autre que l'utilisateur racine (en anglais, « Root »), qui dispose de droits étendus nécessaires au déploiement d'une infrastructure,
- une absence de spécification d'un nombre maximum de noeuds dans un groupe (en anglais, « cluster ») de machines virtuelles, ce qui présente un risque qu'un nombre illimité de machines soit déployé,
- - une absence de spécification d'identifiants de connexion pour un accès à un serveur distant dans un fichier de configuration ou script (tel que par exemple une base de données, un serveur ftp, etc).

En E2, un ou plusieurs attributs sont extraits du rapport d'exécution LOG conformément aux spécifications du plan de gouvernance GVP. Par exemple, l'outil de détection d'anomalie SAST a généré un rapport d'exécution au format JSON et une catégorie d'anomalie #i.

En E3, un ou plusieurs mots clés ou métadonnées KW sont extraits des attributs du rapport d'exécution LOG. Selon un ou plusieurs exemples de réalisation, l'algorithme à mettre en œuvre pour réaliser cette extraction et le nombre d'attributs à extraire sont spécifiés par des attributs du plan de gouvernance GVP. Dans l'exemple de l'annexe, le nombre de mots clés est fixé à 3 et l'outil utilisé est « BERT ». Il s'agit d'un modèle d'intelligence artificielle de type apprentissage profond (en anglais, « deep learning ») pré-entraîné, développé par GoogleAI®, capable de résoudre plusieurs problématiques de traitement automatique du langage ou NLP (de l'anglais, « Natural Language Processing ».

En E4, des informations de contexte spécifiques à l'anomalie détectée sont obtenues. Selon un premier exemple, les informations de contexte comprennent le rapport d'exécution LOG produit par l'outil de détection d'anomalie. Selon un deuxième exemple, elles comprennent le fichier de configuration SCP ayant généré l'anomalie. Selon un troisième exemple, les informations de contexte comprenant un ou plusieurs documents internes d'entreprise, qui sont obtenus, par exemple en interrogeant la base de connaissance KDB à partir des mots clés/métadonnées KW précédemment extraits. Ces documents peuvent être des politiques de sécurité, des conventions de nommage, ou tout autre type de document constituant des directives à suivre dans la mise en œuvre de l'Infrastructure-as-Code au sein d'une société.

Selon un exemple de réalisation, la base de connaissances KDB est organisée comme une base de données vectorielles, qui associe à une ou plusieurs métadonnées, un document encodé sous la forme d'un ensemble de vecteurs. Un avantage est de compresser considérablement l'information stockée. Un autre avantage est de répondre à une contrainte de taille maximale autorisée d'une requête à présenter au module GAN/LLM.

Selon encore un autre exemple, il s'agit d'un ou plusieurs exemples précédents de recommandations de correction d'une anomalie du même type, pour lesquels la demande de mise à jour du fichier de configuration SCP dans le référentiel RPY IaC a été acceptée. Par exemple, ces exemples sont stockés dans un historique, par exemple dans une table de données QDB#i spécifique au type d'anomalie #i (attribut catégorie). Dans cette table, ils sont par exemple associés à un score ou récompense et ils sont choisis dans cette table par la mise en œuvre d'un algorithme d'apprentissage par renforcement en fonction de ce score ou récompense. Un avantage de fournir au module GAN/LLM de tels exemples comme éléments de contexte additionnels est de contrôler le type de réponse attendu. Cet aspect sera détaillé plus avant en relation avec la FIG. 7.

En E5, une requête REQ de correction de l'anomalie est générée à partir des attributs extraits du rapport d'exécution LOG et des informations de contexte obtenues. Elle comprend au moins une question formulée en langage naturel dans laquelle des attributs et des informations de contexte de l'anomalie ont été insérés.

Elle est ensuite présentée en E6 en entrée du module d'intelligence artificielle GAN/LLM distant, via des moyens de communication, par exemple des interfaces de type interface de programmation d'applications API (de l'anglais, « Application Program Interface »), plus particulièrement de type API REST (de l'anglais, « Representational State Transfer » ). Une API REST permet à des applications de communiquer entre elles, en utilisant le protocole http même si elles utilisent des systèmes d'exploitation et des architectures différents.

L'application de la requête REQ en entrée du module d'intelligence artificielle GAN permet d'obtenir en sortie E7 une recommandation RECO de correction du fichier de code source ou script de configuration du service SCP.

En E7, la recommandation RECO de correction du fichier de configuration est validée ou invalidée. Selon un ou plusieurs exemples de réalisation, cette validation consiste à vérifier que le code source du fichier de configuration corrigé contenu dans la recommandation RECO est quasiment identique au code source d'origine. En effet, puisqu'il ne s'agit que d'appliquer les modifications nécessaires pour mettre le fichier de configuration IaC en anomalie en bonne conformité avec les exigences d'une politique de sécurité de l'entreprise, les corrections apportées au bloc de code source doivent être minimes. Pour ce faire, une mesure de similarité par rapport au code source du fichier SCP d'origine est déterminée.

A titre d'exemples non limitatifs, on peut utiliser une des mesures de similarité suivantes, connues en soi :

- l'index de Jaccard,
- la Distance Euclidienne,
- la Similarité Cosinus.

Par exemple, le coefficient de similarité de Jaccard est un indicateur couramment utilisé de la similarité entre deux ensembles. Si U est un ensemble et que A et B sont des sous-ensembles de U, l'indice de Jaccard J(A,B) est défini comme le rapport entre le nombre d'éléments de leur intersection et le nombre d'éléments de leur union :

$$J(A,B) = \frac{|A \cap B|}{|A \cup B|}$$

Cette valeur est de 0 lorsque les deux ensembles sont disjoints, de 1 lorsqu'ils sont égaux, et strictement comprise entre 0 et 1 dans les autres cas. Deux ensembles sont plus similaires (c'est-à-dire qu'ils ont relativement plus de membres en commun) lorsque leur indice de Jaccard est plus proche de 1.

La mesure de similarité obtenue est ensuite comparée à un seuil de similarité donné et la recommandation est validée lorsque la mesure de similarité est supérieure ou égale au seuil. Par exemple le seul est fixé à 0,8 par le plan de gouvernance, comme indiqué dans l'annexe.

Dans ce cas, une demande de mise à jour du fichier de configuration sur la base de la recommandation de correction du fichier de configuration est soumise en E8 à évaluation par une personne, par exemple un spécialiste de la sécurité ou un développeur de code informatique. Par exemple, elle est stockée dans une mémoire de la plateforme de gestion PTF et la personne est notifiée qu'elle doit évaluer une nouvelle demande de mise à jour. Selon un ou plusieurs exemples de réalisation, la demande de mise à jour comprend une demande de tirage, ou de remplacement du fichier de configuration en service par le fichier corrigé dans le référentiel RPY IaC.

On comprend que, suite à cette étape E8, une intervention humaine est requise pour approuver ou refuser la recommandation de correction mise à disposition par le procédé. Elle sera décrite ci-après.

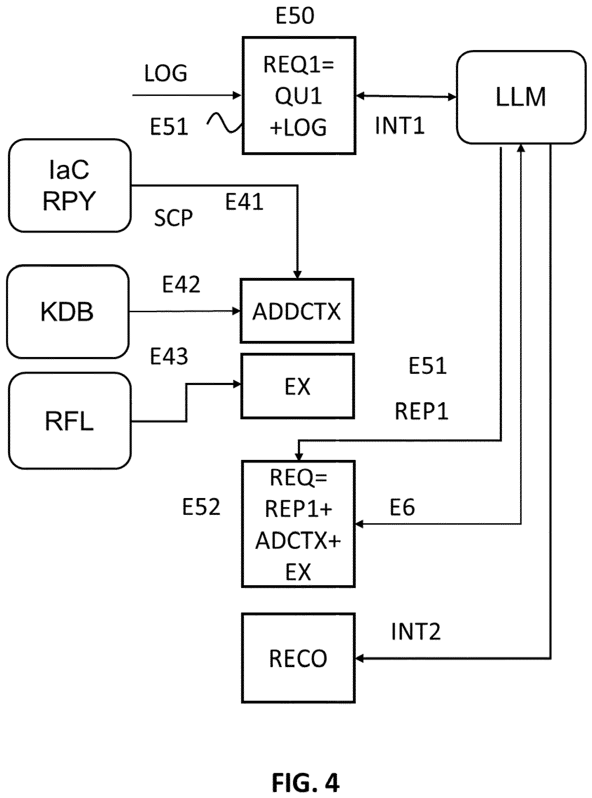

Lorsqu'au contraire la recommandation RECO obtient un score de similarité faible et inférieur au seuil, cela peut révéler que la recommandation est hors sujet et ne tient pas suffisamment compte du contexte fourni. Elle est donc rejetée. Dans ce cas de figure, une personne, par exemple un développeur de l'équipe de développement logiciel ou un superviseur est notifiée en E14 de cette non-similarité. Selon un exemple, il lui est demandé d'interagir manuellement avec le module GAN/LLM en reformulant une requête plus adaptée et permettant d'obtenir en E13 une nouvelle recommandation de correction RECO' qui réussit le test de similarité. Ce cas sera détaillé plus avant en relation avec la FIG. 4.

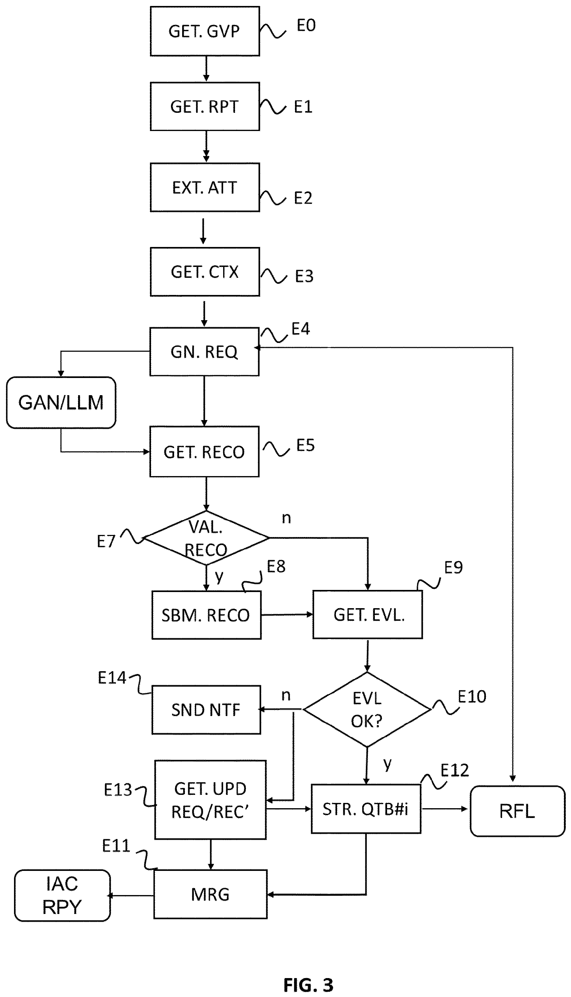

En relation avec la FIG. 3, on décrit désormais les étapes suivantes E9 à E14 du procédé de génération d'une requête de recommandation d'une correction selon un ou plusieurs exemples de réalisation.

Un résultat d'évaluation est reçu en E9. Deux cas sont possibles (E10) :

Dans un premier cas (E10), la demande de mise à jour du fichier de configuration SCP conformément à la recommandation RECO est acceptée. Cela signifie que la recommandation RECO a été évaluée comme fournissant tous les éléments d'une remédiation totale de l'anomalie.

La mise à jour du fichier de configuration SCP est alors déclenchée en E11. Dans un exemple de réalisation, le code source du fichier de configuration SCP stocké dans le référentiel RPY IaC est remplacé par le fichier corrigé conformément à la recommandation RECO. Dans le cas d'une demande de tirage, elle est effectuée à partir d'une branche secondaire du code source de configuration de l'infrastructure de l'environnement informatique, contenant les modifications apportées au niveau du code source (c'est-à-dire le fichier de configuration SCP corrigé conformément à la recommandation de correction RECO) et c'est lors de la validation de la demande de tirage que la branche secondaire est fusionnée avec la branche principale pour intégrer les modifications apportées.

Selon un exemple de réalisation, en E12, la requête REQ et la recommandation RECO sont stockées comme nouvel exemple dans une table de données QDB#i associée au type d'anomalie #i considéré. Un score est attribué à ce nouvel exemple et stocké en mémoire, par exemple dans la table QDB#i correspondante du module d'apprentissage par renforcement RFL de la FIG.1. Selon un ou plusieurs exemples, ce score correspond à ou est attribué sur la base d'une note attribuée par la personne qui a évalué la recommandation RECO. Par exemple, cette note a été attribuée conformément à une grille de notation donnée, qui définit les conditions d'attribution de chaque note de la grille. Par exemple, la note maximale (1) est attribuée lorsque la recommandation RECO permet une remédiation totale de l'anomalie et lorsque la requête satisfait un ensemble de conditions donné. Selon un autre exemple, la note est élevée (0.8) mais non maximale, car il manque au moins un élément, par exemple un attribut spécifié dans le plan de gouvernance GPV, dans la requête REQ présentée au module GAN/LLM. Par exemple, le rôle que doit endosser le module IA générative GAN/LLM pour générer une recommandation de correction RECO, n'a pa été spécifié du tout ou bien il est incorrect. Une cause peut être que, lors de l'extraction des mots clefs du rapport d'exécution LOG, le dispositif 100 n'a pas trouvé de rôle parmi ceux spécifiés dans le plan de gouvernance GVP qui correspondait à l'anomalie rencontrée.

Dans un deuxième cas (E10), l'évaluateur rejette la demande de mise à jour. Une raison peut être que la recommandation RECO ne permet pas une remédiation totale de l'anomalie. Selon un ou plusieurs exemples de réalisation, la personne évaluatrice corrige manuellement la recommandation RECO. Selon un autre exemple, elle se charge d'interagir manuellement avec le module GAN/LLM de sorte à générer une requête modifiée REQ' permettant d'aboutir à la production par le module d'IA générative d'une recommandation de correction RECO' acceptable. Une fois cette nouvelle paire REQ'/RECO' obtenue, l'évaluateur lui attribue une note. En E13, l'ensemble formé par la requête, la recommandation corrigées et la note de l'évaluateur est obtenu par le dispositif 10. Il est stocké en E12 comme nouvel exemple, par exemple dans la table QDB#i et la mise à jour du fichier de configuration SCP dans le référentiel RPY IaC est déclenchée en E11.

On détaille désormais, en relation avec la FIG. 4, la génération E5 de la requête d'obtention d'une recommandation de correction et la présentation E6 de cette requête au module GAN/LLM selon un ou plusieurs exemples de réalisation. Il s'agit ici de prendre en compte le fait que le module GAN/LM a été entrainé de façon massive à répondre à des questions formulées en langage naturel au cours d'une conversation, mais qu'il ne dispose que d'une connaissance limitée du message précédent et ne peut pas relier les différentes parties de la conversation. En effet, le modèle LLM n'a pas de mémoire persistante entres les interactions individuelles et il ne peut donc pas se souvenir des détails spécifiques ou du contexte plus large de la conversation à moins que ce contexte ne lui ne soit fourni explicitement.

La stratégie adoptée est de construire des questions (ou « invites », en anglais) à soumettre au module GAN/LLM de manière standardisée de sorte que ces questions soient claires et reproductibles ultérieurement et de les associer à des informations de contexte spécifiques pour aider le module GAN/LLM à mieux comprendre les besoins spécifiques du demandeur et à fournir des réponses cohérentes et informatives.

Selon un exemple, la requête d'obtention d'une correction REQ est générée en deux étapes. Au cours d'une première étape E51, une première requête REQ1 est générée à partir d'un premier format préconstruit de question dans lequel on insère au moins un attribut en lien avec l'anomalie, extrait du rapport d'exécution, et des informations de contexte comprenant le rapport d'exécution LOG.

La requête obtenue est présentée au module GAN/LLM lors d'une première interaction INT1. La question est formulée de sorte à obtenir en sortie une réponse REP1 comprenant une question formulée en langage naturel permettant de résoudre l'anomalie détectée.

En E52, on utilise la réponse REP1 obtenue pour générer la requête REQ. Pour ce faire, on utilise un deuxième format préconstruit de question dans lequel on insère des informations de contexte additionnelle obtenues en E4 et la question obtenue dans la réponse REP1. La transmission d'informations de contexte spécifiques et relatives à la survenue de l'anomalie au module d'IA générative est essentielle, car ce sont elles qui permettent au modèle LLM de comprendre la question posée et donc de générer des réponses cohérentes.

Les informations de contexte additionnelles comprennent par exemple le fichier de configuration SCP ayant généré l'anomalie obtenu en E41 auprès du référentiel RPY IaC, et/ou un document interne tel que la politique de sécurité applicable obtenu de la base de connaissance KDB en E42 et/ou des exemples issus de la table de données QDB#i associée au type d'anomalie et choisis en E43 par le module d'apprentissage par renforcement RFL.

La requête REQ obtenue est présentée en E6 au module GAN/LLM lors d'une deuxième interaction INT2. La recommandation RECO est obtenue en réponse.

Par exemple, le fichier de configuration ayant généré l'anomalie est un fichier DOCKER et un attribut de l'anomalie détectée est l'absence de définition d'un utilisateur standard, bénéficiant de droits standards, par exemple de droits de lecture seule. Un inconvénient de cette anomalie est que seul l'utilisateur RACINE qui bénéficie de droits accrus, notamment en écriture, est défini, ce qui pose un problème de sécurité et de surcroît n'est pas conforme à la politique de sécurité de l'entreprise.

Par exemple, un utilisateur root sur une machine virtuelle (VM) a un niveau de privilège très élevé, ce qui signifie qu'il peut effectuer une grande variété d'actions potentiellement risquées. Il peut notamment installer, mettre à jour ou supprimer n'importe quel logiciel sur la VM. Cela signifie qu'il peut introduire des logiciels malveillants ou causer des problèmes en supprimant des fichiers système importants. Il peut aussi modifier les fichiers de configuration, les fichiers de démarrage, et d'autres éléments essentiels du système. Des modifications incorrectes peuvent entraîner un dysfonctionnement ou une panne du système. Il peut aussi surveiller tous les processus en cours d'exécution sur la VM, ce qui inclut la capacité de voir les activités des autres utilisateurs. Cela peut poser des problèmes de confidentialité. Il a le droit de créer, modifier ou supprimer des comptes d'utilisateurs sur la VM. Cela peut être utilisé pour accorder ou refuser l'accès à d'autres utilisateurs, mais cela comporte également un risque de suppression accidentelle de comptes. Il peut également modifier les autorisations d'accès aux fichiers et aux répertoires, ce qui peut potentiellement exposer des données sensibles ou rendre le système vulnérable à des attaques. Il peut configurer les règles de pare-feu, les politiques de sécurité et d'autres paramètres de sécurité. Des erreurs de configuration peuvent laisser la VM vulnérable aux attaques. Il a aussi les droits d'accès aux interfaces réseau de la VM et peut les contrôler, ce qui signifie qu'il peut manipuler le trafic réseau, modifier les règles de pare-feu et potentiellement compromettre la sécurité du réseau. Enfin, il a la possibilité de redémarrer ou arrêter la VM, ce qui peut interrompre les services en cours d'exécution et causer une perte de données.

Par exemple, le type de fichier (DOCKER) et l'attribut de l'anomalie (le fichier DOCKER ne comprend pas d'instruction UTILISATEUR) sont imbriqués dans la phrase préconstruite comme suit :

REQ 1 :« A partir de la phrase suivante : Le fichier « DOCKER » ne comprend pas d'instruction UTILISATEUR », pose une question qui va résoudre le problème'.

La réponse REP1 obtenue prend la forme de la question suivante :

REP1 :« A partir de TYPE du FICHIER « DOCKER », comment modifier le FICHIER « DOCKER » pour inclure une instruction UTILISATEUR et résoudre le problème de ne pas en avoir ? ».

La requête REQ comprend une question générée à partir de la question REP1 retournée par le module GAN/LLM, le fichier de configuration SCP ayant généré l'anomalie et un deuxième format de question préconstruite standard et des éléments de contexte additionnels, qui prend avec l'exemple précédent, la forme suivante :

> REQ *: Partant du fichier suivant* DOCKER :
> *[ENTREE] bloc de code source extrait du fichier DOCKER*
> *Comment modifier le FICHIE DOCKER pour inclure une INSTRUCTION*
> *UTILISATEUR et résoudre le problème de ne pas en avoir ?*
> *[CONTROLE] : Prends en compte les « NB-EXAMPLES » suivants*
> *[CONTROLE] : Et prend le rôle d'un « DEVELOPPEUR INFORMATIQUE ».*

On lui associe des informations de contexte additionnelles, comprenant par exemple la définition d'un type d'utilisateur standard.

Un avantage de fournir de telles informations de contexte additionnelles est d'augmenter les chances d'obtenir en retour une recommandation de correction permettant d'obtenir une remédiation totale de l'anomalie au niveau du code source. En effet, dans l'exemple ci-dessus, le module GAN/LLM va pouvoir utiliser ces informations pour générer une correction du fichier de configuration SCP dans lequel l'instruction d'utilisateur standard aura été ajoutée.

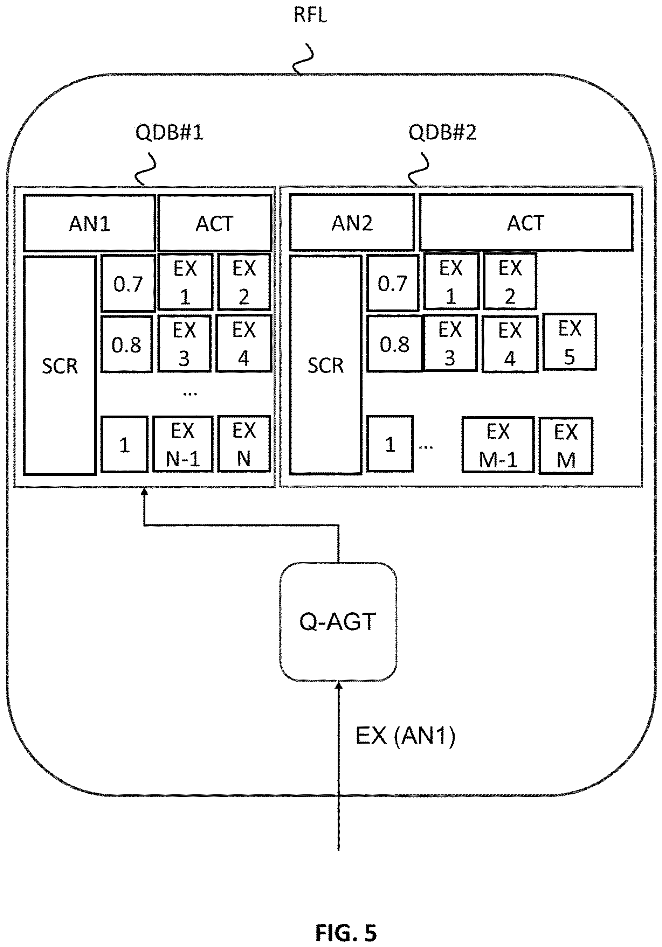

On décrit maintenant en relation avec la FIG. 5 un exemple de mise en œuvre d'un module d'apprentissage par renforcement par la plateforme de gestion PTF de la FIG. 1.

L'apprentissage par renforcement est un type d'apprentissage automatique selon lequel un agent logiciel, c'est-à-dire un programme informatique qui est configuré pour agir de façon autonome et accomplir des tâches à la manière d'un automate, apprend à prendre des décisions, en interagissant avec un environnement. Les décisions prises concernent le déclenchement d'actions, qui maximisent une récompense.

Selon un exemple de réalisation, le module RFL met en œuvre un algorithme de type « Q-Learning », connu en soi, par exemple décrit dans le document publié à l'URL suivante : https://datascientest.com/q-learning-le-machine-learning-avec-apprentissage-par-renforcement, dont le principe est d'explorer différentes actions possibles pour un état donné et de choisir la meilleure action à prendre. L'agent logiciel Q-AGT est configuré pour faire ce choix en fonction d'une stratégie, qui peut être soit une stratégie de choix optimal, soit une stratégie d'exploration. Dans le cas présent, on suppose que la stratégie appliquée est celle du choix optimal.

L'agent Q-AGT s'appuie sur une ou plusieurs tables de données QDB de valeurs Q (appelées fonctions Q). Les valeurs Q, stockées dans la table de données QDB#1, QDB#2, représentent chacune une estimation de la valeur d'une action dans un état particulier. Plus précisément, la table QDB#1, QDB#2 stocke les valeurs Q pour chaque état-action possible dans un environnement donné. Chaque cellule de la table représente la valeur Q pour une paire état-action, dans le cas présent un exemple d'interaction avec le module GAN/LLM (requête REQ + recommandation de correction RECO). Cette valeur Q pour la paire état-action estime une récompense future attendue suite à l'exécution par l'agent de l'action donnée dans l'état donné. L'agent Q-AGT est configuré pour choisir l'action ayant la valeur Q la plus élevée pour chaque état. La table QDB#1, QDB#2 est mise à jour à chaque étape de l'apprentissage par renforcement pour refléter les nouvelles estimations de valeur apprises à partir des interactions de l'agent avec l'environnement.

Il convient de noter néanmoins que lorsque le nombre de paires état-action devient trop élevé ou bien ou l'espace d'états/actions est continu, l'utilisation d'une telle table QDB#1, QDB#2 peut s'avérer inappropriée. En alternative, il est envisagé de recourir à une technique d'apprentissage profond de type « Deep Q-Learning » qui fait intervenir un réseau de neurones profond, en particulier un réseau Q profond (Deep Q-Network, ou DQN).

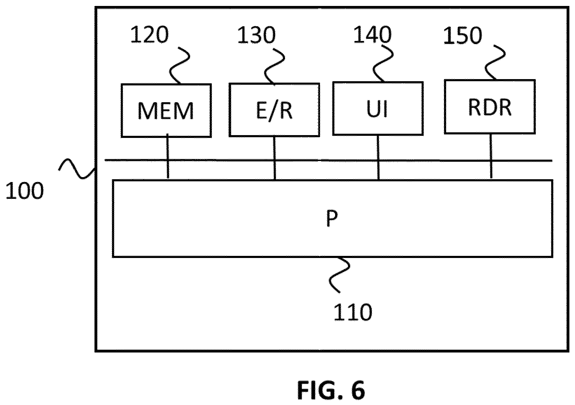

Dans le cadre de la méthode de génération d'une recommandation de correction qui vient d'être décrite et qui est destinée à être mise en œuvre au sein de la plateforme de gestion PTF, l'agent ne va pas évoluer dans un environnement unique, mais plutôt dans une pluralité de micro-environnements, chaque micro-environnement étant associé à un type d'anomalie donné #i avec i entier compris entre 1 et N. Chaque micro-environnement comprend une table QDB#i (sur la FIG. 6, on a représenté 2 tables seulement, pour i = 1, 2. Ce découpage permet notamment de définir des environnements de plus petites dimensions. Chacun des ces micro-environnement constituant un espace d'états simple et discret, la technique de Q-Learning est donc tout-à-fait adaptée.

*Environnement*

Le micro-environnement associé à un type d'anomalie donné stocke des exemples d'interactions EX1, 2, ..., M avec M entier, obtenues par le dispositif 100. Ces exemples ont été successivement validés puis la demande de mise à jour du fichier de configuration SCP ayant généré l'anomalie en question a été acceptée par une personne évaluatrice qui a attribué une note à l'exemple, conformément à une grille de notation donnée. Par exemple la note est comprise entre 0 et 1. Les exemples contenus dans les tables QDB#i ont généralement des notes élevées puisqu'ils ont passé les tests de validation et d'évaluation.

*Etat/Action*

Dans le contexte de l'apprentissage par renforcement et du Q-Learning, un état est une représentation de la situation ou du contexte actuel de l'agent dans l'environnement. Il regroupe toutes les informations pertinentes que l'agent doit connaître pour prendre une décision sur l'action à entreprendre. Au sein de la plateforme PTF, un état est constitué de l'ensemble des exemples qui composent un micro-environnement correspondant à une anomalie de sécurité spécifique.

Une action effectuée par l'agent Q-AGT au sein d'un tel micro-environnement correspond à un exemple d'interaction EX1, EX2... EXM avec le module GAN/LLM pour la génération de recommandations de correction d'anomalies de ce type, stocké dans la table de données TBQ.

*Valeur de l'action/récompense*

Une valeur de l'action ou récompense correspond ici à une capacité de l'exemple d'interaction correspondant à générer une recommandation optimale, c'est-à-dire qui sera validée (E7) et qui obtiendra l'approbation d'un superviseur E9 en réponse à une demande de tirage.

*Intervention de l'agent en 2 étapes*

L'intervention de l'agent Q-AGT au sein de la plateforme PTF intervient à deux niveaux :

A un premier niveau, il fournit un ou plusieurs exemples qui constituent une partie des informations de contexte additionnelles à ajouter lors d'une interaction avec le module GAN/LLM. Il s'agit plus précisément de sélectionner un nombre d'exemples donné, par exemple conforme à un paramètre (« n_exemples ») spécifié dans le plan de gouvernance GVP. L'agent Q-AGT est mis en œuvre pour sélectionner dans la table de données QDB#i associée au micro-environnement correspondant au type d'anomalie #i détecté par le rapport d'exécution LOG, la ou les actions (exemples) qui lui permettent de maximiser sa récompense selon une politique donnée.

Par exemple, selon une politique de choix optimal, il choisit les n-exemples exemples d'interaction ayant obtenu la meilleure récompense dans la table QDB#i.

A un deuxième niveau, il est configuré pour stocker en mémoire un nouvel exemple REQ/RECO dont la demande de mise à jour a été acceptée par l'évaluateur. Il est configuré pour prendre en compte la note attribuée par l'évaluateur pour déterminer la récompense qu'il associe à ce nouvel exemple dans la table de données QDB#i associée au micro-environnement concerné. Selon un ou plusieurs exemples, la valeur de récompense correspond à la note attribuée par l'évaluateur. Selon d'autres exemples, l'agent Q-AGT peut être configuré pour modifier à la baisse les récompenses associées aux exemples plus anciens par rapport au nouvel exemple ajouté par application d'un critère de prime à la nouveauté. Un avantage est de favoriser le choix de ce nouvel exemple lors d'une prochaine demande d'informations de contexte additionnelles de la part du dispositif 100 et donc de permettre une adaptation à une évolution des outils de détection des anomalies, de la politique de sécurité ou plus généralement des modules qui interagissent avec le dispositif 100.

Les fonctions, étapes et procédés qui ont été décrits dans ce document peuvent être mises en œuvre par logiciel (par exemple, via un logiciel sur un ou plusieurs processeurs, pour exécution sur un ordinateur à usage général ou à usage spécifique) et/ou être mises en œuvre par du hardware (par exemple un ou plusieurs circuits électroniques, et/ou tout autre composant matériel).

La présente description concerne ainsi un logiciel ou programme d'ordinateur, susceptible d'être exécuté par un dispositif hôte (par exemple, le dispositif 100) au moyen d'un ou plusieurs processeurs de données, ce logiciel / programme comportant des instructions pour causer l'exécution par ce dispositif hôte de tout ou partie des étapes de l'un ou des procédés décrits dans ce document. Ces instructions sont destinées à être stockées dans une mémoire du dispositif hôte, chargées puis exécutées par un ou plusieurs processeurs de ce dispositif hôte de sorte à causer l'exécution par ce dispositif hôte du procédé.

Ce logiciel / programme peut être codé au moyen de n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif hôte peut être mis en œuvre par une ou plusieurs machines physiquement distinctes. Le dispositif hôte peut présenter globalement l'architecture d'un ordinateur, incluant des constituants d'une telle architecture: mémoire(s) de données, processeur(s), bus de communication, interface(s) matérielle(s) pour la connexion de ce dispositif hôte à un réseau ou un autre équipement, interface(s) utilisateur, etc.

Dans un mode de réalisation, tout ou partie des étapes du procédé de programmation ou d'un autre procédé décrit dans ce document sont mises en œuvre par un dispositif de programmation doté de moyens de mise en œuvre de ces étapes de ce procédé.

Ces moyens peuvent comprendre des moyens logiciels (software) (par exemple, des instructions d'un ou plusieurs composants d'un programme) et/ou moyens matériels (hardware) (par exemple, mémoire(s) de données, processeur(s), bus de communication, interface(s) matérielle(s), etc.).

Ces moyens peuvent comprendre par exemple un ou plusieurs circuits configurés pour exécuter une ou plusieurs ou toutes les étapes d'un des procédés décrits ici. Ces moyens peuvent comprendre par exemple au moins un processeur et au moins une mémoire comprenant des instructions de programme configurées pour, lorsqu'elles sont exécutées par le processeur, causer l'exécution par le dispositif d'une ou plusieurs ou toutes les étapes d'un des procédés décrits ici.

La figure 6 illustre un exemple de structure matérielle d'un dispositif 100 de génération d'une recommandation de correction d'un fichier de configuration selon un ou plusieurs modes de réalisation. Dans cet exemple, le dispositif 100 est configuré pour mettre en œuvre toutes les étapes du procédé précité tel que décrit dans le présent document. En variante, il pourrait aussi mettre en œuvre une partie seulement de ces étapes.

En relation avec la FIG. 6, le dispositif 100 comprend au moins un processeur 110 et au moins une mémoire 120. Le dispositif 100 peut aussi comprendre une ou plusieurs interfaces de communication. Dans cet exemple, le dispositif 100 comprend des interfaces réseau 130 (par exemple, des interfaces réseau pour l'accès à un réseau câblé / sans fil, y compris une interface Ethernet, une interface WIFI, etc.) connectées au processeur 110 et configurées pour communiquer via un ou plusieurs liens de communication câblés / non câblés et des interfaces utilisateur 140 (par exemple, un clavier, une souris, un écran d'affichage, etc.) connectées au processeur. Le dispositif 100 peut également comprendre un ou plusieurs lecteurs de support RDR 150 pour lire un support de stockage lisible par ordinateur (par exemple, un disque de stockage numérique (CD-ROM, DVD, Blue Ray, etc.), une clé USB, etc.). Le processeur 110 est connecté à chacun des autres composants précités afin d'en commander le fonctionnement.

La mémoire 120 peut comprendre une mémoire vive (RAM), une mémoire cache, une mémoire non volatile, une mémoire de sauvegarde (par exemple, des mémoires programmables ou flash), une mémoire morte (ROM), un disque dur (HDD), un lecteur à état solide (SSD) ou toute combinaison de ceux-ci. La ROM de la mémoire 120 peut être configurée pour stocker, entre autres, un système d'exploitation du dispositif 100 et/ou un ou plusieurs codes de programmes informatiques d'une ou plusieurs applications logicielles. La RAM de la mémoire 120 peut être utilisée par le processeur 110 pour le stockage temporaire de données.

Le processeur 110 peut être configuré pour stocker, lire, charger, exécuter et/ou traiter autrement des instructions stockées dans un support de stockage d'informations lisible par ordinateur et/ou dans la mémoire 120 de sorte que, lorsque les instructions sont exécutées par le processeur, le dispositif 100 exécute une ou plusieurs ou toutes les étapes du procédé décrit dans le présent document. Des moyens mettant en œuvre une fonction ou un ensemble de fonctions peuvent correspondre dans ce document à un composant logiciel, à un composant matériel ou bien à une combinaison de composants matériels et/ou logiciels, apte à mettre en œuvre la fonction ou l'ensemble de fonctions, selon ce qui est décrit ci-dessous pour les moyens concernés.

La présente invention concerne aussi un support d'informations lisible par un processeur de données, comportant des instructions d'un programme tel que mentionné ci-dessus.

Le support d'informations peut être n'importe quel moyen matériel, entité ou appareil, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

Un mode de réalisation concerne également un produit programme d'ordinateur comprenant un support de stockage lisible par ordinateur sur lequel sont stockées des instructions de programme, les instructions de programme étant configurées pour causer la mise en œuvre par le dispositif hôte (par exemple un ordinateur) de tout ou partie des étapes d'un ou des procédés décrits ici lorsque les instructions de programme sont exécutées par un ou plusieurs processeurs et/ou un ou plusieurs composants matériels programmables du dispositif hôte.

Selon un ou plusieurs modes de réalisation, le dispositif 100 est lui-même intégré dans un dispositif hôte, par exemple la plateforme PTF de gestion d'une infrastructure d'un environnement informatique telle que décrite ici. Cette plateforme peut elle aussi être mise en œuvre par une ou plusieurs machines physiquement distinctes et présenter globalement l'architecture d'un ordinateur et la structure matérielle d'un ordinateur comme précédemment décrit pour le dispositif 100 en relation avec la FIG. 7.

Les modes de réalisations qui viennent d'être présentés, ainsi que leurs variantes, présentent chacun de nombreux avantages. Ils permettent d'exploiter la puissance de l'intelligence artificielle générative dans une méthode et dispositif permettant la génération automatique de correctifs de fichiers de configuration d'une infrastructure et de service d'un environnement informatique déployé selon un mode d'Infrastructure-as-Code IaC.

Grâce à l'utilisation combinée de l'IA générative, de tables de données permettant la fourniture de contexte additionnel pertinent et d'une technique d'apprentissage par renforcement au sein d'une plateforme de gestion de l'environnement informatique, cette méthode et ce dispositif permettent de s'adapter à une évolution du contexte, par exemple des outils de détection d'anomalie ou de la politique de l'entreprise pour laquelle l'environnement informatique a été déployé.

ANNEXE

```
type: Plan_de_Gouvernance
spec:
SAST:
outil: KICS
attribut: ["Valeur_reelle"]
log_type: json
DAST:
outil: Appscan
attributs: ["Description"]
log_type: json
roles:["specialiste_securite","responsible_developpeur", "architecte"]
SIMILARITE:
Mesure_similarite: "index_jaccard"
seuil: 0.80
extraction_motscles:
algorithme: "BERT"
n_motscles: 3
apprentissage_renforcement:
n_exemples: 3
```

Revendications

1. Procédé de génération d'une recommandation de correction d'un fichier de configuration d'une infrastructure d'un environnement informatique d'une entreprise au sein duquel s'exécutent des services, ladite infrastructure ayant été déployée automatiquement en tant que code à partir dudit fichier de configuration,
ledit procédé comprenant :

   - L'obtention et le stockage (E1) en mémoire d'un rapport d'exécution (LOG) comprenant une anomalie de conformité détectée dans le fichier de configuration (SCP) lors de l'exécution d'un dit service par un outil de détection d'anomalie ;
   - L'extraction (E2) d'attributs du rapport d'exécution (LOG) conformément aux spécifications d'un plan de gouvernance (GVP) ;
   - L'obtention (E4) d'informations de contexte spécifiques à l'anomalie, lesdites informations de contexte comprenant au moins le rapport d'exécution (LOG);
   - La génération d'une requête (REQ) de correction de l'anomalie à partir desdits attributs extraits du rapport d'exécution LOG et des informations de contexte obtenues, ladite requête comprenant au moins une question formulée en langage naturel dans laquelle lesdits attributs et lesdites informations de contexte ont été insérés ;
   - La présentation (E5) de ladite requête de correction de l'anomalie en entrée d'un modèle d'intelligence artificielle générative préalablement entraîné, ladite requête de correction comprenant ladite question formulée en langage naturel et lesdites informations de contexte de l'anomalie, et l'obtention (E6) en sortie d'une recommandation (RECO) de correction du fichier de configuration ;
   - La validation (E7) de la recommandation de correction du fichier de configuration comprenant la détermination d'une mesure de similarité par rapport au code source du fichier de configuration (SCP) et la comparaison de la mesure de similarité à un seuil d'acceptabilité ;
   - Lorsque la mesure de similarité est supérieure au seuil d'acceptabilité, la soumission (E8) de la recommandation de correction du fichier de configuration pour évaluation par un utilisateur.

2. Procédé selon la revendication précédente, **caractérisé en ce que** la génération de la requête de correction (REQ) comprend la génération (E50) d'une requête (REQ1) d'obtention de ladite question à partir d'une question standard préconstruite et desdits attributs, la présentation de ladite requête en entrée dudit module d'intelligence artificielle lors d'une première interaction avec le module d'intelligence artificielle et l'obtention (E52) de ladite question (REP1) en sortie du module.

3. Procédé selon la revendication 2, **caractérisé en ce qu'**il comprend l'extraction (E3) de mots clés (KW) desdits attributs du rapport d'exécution (LOG) et l'obtention (E4) d'informations de contexte comprend l'obtention d'information de contexte additionnelles comprenant un ou plusieurs documents internes de l'entreprise comprenant des directives pour mettre en œuvre l'infrastructure en tant que code, par interrogation d'au moins une table de données (KDB, QDB#1, QDB#2), comprenant des entrées associant à au moins undit mot clé des informations de contexte de l'environnement informatique ,.

4. Procédé selon la revendication 3, **caractérisé en ce que** les informations de contexte additionnelles appartiennent à un groupe comprenant au moins :

   - le fichier de configuration ayant généré l'anomalie,
   - des informations relatives à une politique de sécurité applicable à l'environnement informatique,
   - un ou plusieurs exemples de requêtes/recommandations de correction précédemment obtenus.

5. Procédé selon la revendication 2, **caractérisé en ce que** l'obtention d'informations de contexte additionnelles comprend l'obtention d'exemples de requêtes d'obtention d'une recommandation de correction par interrogation d'un module d'apprentissage par renforcement (RFL), ledit module étant configuré pour choisir au moins un exemple de requête d'obtention d'une recommandation de correction dans une table de données (QDB#1, QDB#2) relative à un type de l'anomalie, ladite table comprenant des exemples de requête d'obtention d'une recommandation de correction ayant abouti à l'obtention de recommandations de correction (RECO, RECO') d'une anomalie dudit type, validées par l'utilisateur et associés à un score, en fonction dudit score.

6. Procédé selon la revendication 1, **caractérisé en ce qu'**il comprend la lecture préalable (E0) d'un document, ou plan de gouvernance, comprenant des informations relatives appartenant à groupe comprenant :

   - Des informations relatives à un format du rapport d'exécution,
   - Des informations relatives audit au moins un attribut de l'anomalie à extraire du rapport d'exécution,
   - Des informations relatives à la mesure de similarité et audit seuil d'acceptabilité à mettre en œuvre pour la validation de la recommandation de correction du fichier de configuration.

7. Procédé selon l'une quelconque des revendications précédentes, **caractérisé en ce que** la soumission (E8) de la recommandation de correction comprend une demande de mise à jour, ou demande de tirage, du fichier de configuration (SCP), dans un référentiel de gestion du code source, conformément à la recommandation de correction.

8. Procédé selon l'une quelconque des revendications précédentes, **caractérisé en ce qu'**il comprend l'obtention (E9) d'un résultat d'évaluation de la recommandation de correction par un utilisateur, et, en fonction du résultat d'évaluation obtenu, le déclenchement ou non d'une mise à jour (E11) du fichier de configuration (SCP) conformément à la recommandation de correction.

9. Procédé selon la revendication précédente, **caractérisé en ce qu'**il comprend, en cas de déclenchement de la mise à jour du fichier de configuration (E11), l'enregistrement (E12) de la requête d'obtention d'une recommandation et la recommandation de correction comme exemple dans une table de données (QDB#1, QDB#2) relative à un type de l'anomalie, en association avec un score.

10. Dispositif de génération d'une recommandation de correction d'un fichier de configuration d'une infrastructure d'un environnement informatique d'une entreprise au sein duquel s'exécutent des services, ladite infrastructure ayant été déployée automatiquement en tant que code à partir dudit fichier de configuration,
    ledit dispositif comprenant des moyens pour:

    - L'obtention et le stockage en mémoire d'un rapport d'exécution (LOG) comprenant une anomalie de conformité détectée dans le fichier de configuration (SCP) lors de l'exécution d'un dit service par un outil de détection d'anomalies;
    - L'extraction d'attributs du rapport d'exécution (LOG) conformément aux spécifications d'un plan de gouvernance (GVP) ;
    - L'obtention d'informations de contexte spécifiques à l'anomalie, lesdites informations de contexte comprenant au moins le rapport d'exécution (LOG);
    - La génération d'une requête (REQ) de correction de l'anomalie à partir desdits attributs extraits du rapport d'exécution LOG et des informations de contexte obtenues, ladite requête comprenant au moins une question formulée en langage naturel dans laquelle lesdits attributs et lesdites informations de contexte ont été insérés ;
    - La présentation de ladite requête de correction de l'anomalie en entrée d'un modèle d'intelligence artificielle générative préalablement entraîné, ladite requête de correction comprenant une question formulée en langage naturel et des informations de contexte de l'anomalie, et l'obtention en sortie d'une recommandation (RECO) de correction du fichier de configuration ;
    - La validation de la recommandation de correction du fichier de configuration comprenant la détermination d'une mesure de similarité par rapport au code source du fichier de configuration (SCP) et la comparaison de ladite mesure de similarité à un seuil d'acceptabilité ;
- Lorsque la mesure de similarité est supérieure au seuil d'acceptabilité, la soumission de la recommandation de correction du fichier de configuration pour évaluation par un utilisateur.

**11.** Dispositif selon la revendication précédente, **caractérisé en ce qu'**il comprend :

- au moins un processeur ; et

- au moins une mémoire comprenant un code de programme informatique, la au moins une mémoire et le code de programme informatique étant configurés pour, avec l'au moins un processeur, provoquer l'exécution dudit dispositif.

**12.** Programme d'ordinateur, comprenant des instructions de code de programme, qui lorsqu'elles sont exécutées par un ordinateur, provoquent la mise en œuvre par l'ordinateur des étapes du procédé selon l'une quelconque des revendications 1 à 9.

**13.** Plateforme (PTF) de gestion du déploiement d'une infrastructure d'environnement informatique à l'aide d'instructions de code de programme comprenant un dispositif (100) de génération d'une recommandation de correction d'une configuration selon l'une des revendications 10 et 11.

**14.** Plateforme de gestion selon la revendication précédente, **caractérisée en ce qu'**elle comprend au moins une mémoire comprenant une table de données ou base de connaissances (KDB), comprenant des entrées, unedite entrée associant à au moins un mot clé des informations de contexte additionnelles.

**15.** Plateforme de gestion selon la revendication précédente, **caractérisée en ce que** ladite au moins une mémoire comprend en outre au moins une table de données (QDB#1, QDB#2) relative à un type de l'anomalie, ladite table comprenant des exemples de requête d'obtention d'une recommandation de correction ayant abouti à l'obtention de recommandations de correction (RECO, RECO') d'une anomalie dudit type, validées par l'utilisateur, et associés à un score, et **en ce que** la plateforme comprend en outre un module d'apprentissage par renforcement configuré pour choisir au moins un exemple de requête d'obtention d'une recommandation de correction dans une table de données (QDB#1, QDB#2) relative à un type de l'anomalie, en fonction dudit score, en réponse à une requête d'obtention d'informations de contexte additionnelles reçue dudit dispositif (100).

**Patentansprüche**

**1.** Verfahren zum Generieren einer Korrekturempfehlung für eine Konfigurationsdatei einer Infrastruktur einer Computerumgebung eines Unternehmens, innerhalb der Dienste ausgeführt werden, wobei die Infrastruktur automatisch als Code aus der Konfigurationsdatei bereitgestellt wurde,
wobei das Verfahren umfasst:

- Erhalten und Speichern (E1), im Speicher, eines Ausführungsberichts (LOG), umfassend eine in der Konfigurationsdatei (SCP) während der Ausführung eines Dienstes durch ein Anomalieerkennungswerkzeug erkannte Konformitätsanomalie;
- Extrahieren (E2) von Attributen des Ausführungsberichts (LOG) entsprechend den Spezifikationen eines Governance-Plans (GVP);
- Erhalten (E4) von anomaliespezifischen Kontextinformationen, wobei die Kontextinformationen mindestens den Ausführungsbericht (LOG) umfassen;
- Generieren einer Korrekturanfrage (REQ) zu der Anomalie aus den aus dem Ausführungsbericht LOG extrahierten Attributen und den erhaltenen Kontextinformationen, wobei die Anfrage mindestens eine in natürlicher Sprache formulierte Frage umfasst, in die die Attribute und die Kontextinformationen eingefügt wurden;
- Darstellen (E5) der Korrekturanfrage zu der Anomalie am Eingang eines vorab trainierten generativen Modells künstlicher Intelligenz, wobei die Korrekturanfrage die in natürlicher Sprache formulierte Frage und die Kontextinformationen der Anomalie umfasst, und Erhalten (E6) einer Empfehlung (RECO) für die Korrektur der Konfigurationsdatei am Ausgang;
- Validieren (E7) der Korrekturempfehlung der Konfigurationsdatei umfassend das Bestimmen eines Ähnlichkeitsmaßes in Bezug auf den Quellcode der Konfigurationsdatei (SCP) und den Vergleich des Ähnlichkeitsmaßes mit einer Akzeptabilitätsschwelle;
- Wenn das Ähnlichkeitsmaß über der Akzeptabilitätsschwelle liegt, Übermitteln (E8) der Korrekturempfehlung der Konfigurationsdatei zum Bewerten durch einen Benutzer.

**2.** Verfahren nach dem vorstehenden Anspruch, **dadurch gekennzeichnet, dass** das Generieren der Korrekturanfrage (REQ) das Generieren (E50) einer Anfrage (REQ1) zum Erhalten der Frage aus einer vorkonstruierten Standardfrage und den Attributen sowie das Darstellen der Anfrage am Eingang des Moduls für künstliche Intelligenz während einer ersten Interaktion mit dem Modul für künstliche Intelligenz und das Erhalten (E52) der Frage (REP1) am Ausgang des Moduls umfasst.

3. Verfahren nach Anspruch 2, **dadurch gekennzeichnet, dass** es das Extrahieren (E3) von Schlüsselwörtern (KW) aus den Attributen des Ausführungsberichts (LOG) umfasst, und das Erhalten (E4) von Kontextinformationen das Erhalten zusätzlicher Kontextinformationen, umfassend ein oder mehrere interne Dokumente des Unternehmens, umfassend die Richtlinien zum Implementieren der Infrastruktur als Code, umfasst, durch Abfrage mindestens einer Datentabelle (KDB, QDB#1, QDB#2), umfassend Einträge, die mindestens einem Schlüsselwort Kontextinformationen der Computerumgebung zuordnen.

4. Verfahren nach Anspruch 3, **dadurch gekennzeichnet, dass** die zusätzlichen Kontextinformationen zu einer Gruppe gehören, mindestens umfassend:

   - die Konfigurationsdatei, welche die Anomalie generiert hat,
   - Informationen relativ zu einer für die Computerumgebung anwendbaren Sicherheitsrichtlinie,
   - ein oder mehrere Beispiele von zuvor erhaltenen Anfragen/Korrekturempfehlungen.

5. Verfahren nach Anspruch 2, **dadurch gekennzeichnet, dass** das Erhalten von zusätzlichen Kontextinformationen das Erhalten von Beispielen für Anfragen zum Erhalten einer Korrekturempfehlung durch Abfrage eines Verstärkungslernmoduls (RFL) umfasst, wobei das Modul konfiguriert ist, um mindestens ein Beispiel einer Anfrage zum Erhalten einer Korrekturempfehlung in einer Datentabelle (QDB#1, QDB#2) relativ zu einem Typ der Anomalie auszuwählen, wobei die Tabelle Beispiele von Anfragen zum Erhalten einer Korrekturempfehlung umfasst, die zum Erhalten von Korrekturempfehlungen (RECO, RECO') einer Anomalie des Typs geführt haben, die durch den Benutzer validiert wurden und einem Score zugeordnet sind, in Abhängigkeit von dem Score.

6. Verfahren nach Anspruch 1, **dadurch gekennzeichnet, dass** es das vorherige Lesen (E0) eines Dokuments oder Governance-Plans, umfassend zugehörige Informationen, umfasst, die zu einer Gruppe gehören umfassend:

   - Informationen relativ zu einem Format des Ausführungsberichts,
   - Informationen relativ zu mindestens einem Attribut der Anomalie, die aus dem Ausführungsbericht zu extrahieren sind,
   - Informationen relativ zum Ähnlichkeitsmaß und der Akzeptabilitätsschwelle, die zum Validieren der Korrekturempfehlung der Konfigurationsdatei zu implementieren sind.

7. Verfahren nach einem der vorstehenden Ansprüche, **dadurch gekennzeichnet, dass** das Übermitteln (E8) der Korrekturempfehlung eine Anfrage zum Aktualisieren, oder Pull-Anfrage, der Konfigurationsdatei (SCP) in einem Quellcodeverwaltungsrepository entsprechend der Korrekturempfehlung umfasst.

8. Verfahren nach einem der vorstehenden Ansprüche, **dadurch gekennzeichnet, dass** es das Erhalten (E9) eines Bewertungsergebnisses der Korrekturempfehlung durch einen Benutzer umfasst, und, in Abhängigkeit von dem erhaltenen Bewertungsergebnis, das Auslösen oder Nicht-Auslösen einer Aktualisierung (E11) der Konfigurationsdatei (SCP) gemäß der Korrekturempfehlung.

9. Verfahren nach dem vorstehenden Anspruch, **dadurch gekennzeichnet, dass** es im Fall des Auslösens der Aktualisierung der Konfigurationsdatei (E11) das Aufzeichnen (E12) der Anfrage zum Erhalten einer Empfehlung und der Korrekturempfehlung als Beispiel in einer Datentabelle (QDB#1, QDB#2) relativ zu einem Typ der Anomalie in Verbindung mit einem Score umfasst.

10. Vorrichtung zum Generieren einer Korrekturempfehlung für eine Konfigurationsdatei einer Infrastruktur einer Computerumgebung eines Unternehmens, innerhalb der Dienste ausgeführt werden, wobei die Infrastruktur automatisch als Code aus der Konfigurationsdatei bereitgestellt wurde, wobei die Vorrichtung Mittel umfasst zum:

   - Erhalten und Speichern im Speicher eines Ausführungsberichts (LOG), umfassend eine in der Konfigurationsdatei (SCP) während der Ausführung eines Dienstes durch ein Anomalieerkennungswerkzeug erkannte Konformitätsanomalie;
   - Extrahieren von Attributen des Ausführungsberichts (LOG) entsprechend den Spezifikationen eines Governance-Plans (GVP);
   - Erhalten von anomaliespezifischen Kontextinformationen, wobei die Kontextinformationen mindestens den Ausführungsbericht (LOG) umfassen;
   - Generieren einer Korrekturanfrage (REQ) zu der Anomalie aus den aus dem Ausführungsbericht LOG extrahierten Attributen und den erhaltenen Kontextinformationen, wobei die Anfrage mindestens eine in natürlicher Sprache formulierte Frage umfasst, in die die Attribute und die Kontextinformationen eingefügt wurden;
- Darstellen der Korrekturanfrage zu der Anomalie am Eingang eines vorab trainierten generativen Modells künstlicher Intelligenz, wobei die Korrekturanfrage eine in natürlicher Sprache formulierte Frage und Kontextinformationen der Anomalie umfasst, und Erhalten einer Empfehlung (RECO) für die Korrektur der Konfigurationsdatei am Ausgang;
- Validieren der Korrekturempfehlung der Konfigurationsdatei, umfassend das Bestimmen eines Ähnlichkeitsmaßes in Bezug auf den Quellcode der Konfigurationsdatei (SCP) und den Vergleich des Ähnlichkeitsmaßes mit einer Akzeptabilitätsschwelle;
- Wenn das Ähnlichkeitsmaß über der Akzeptabilitätsschwelle liegt, Übermitteln der Korrekturempfehlung der Konfigurationsdatei zum Bewerten durch einen Benutzer.

11. Vorrichtung nach dem vorstehenden Anspruch, **dadurch gekennzeichnet, dass** sie umfasst:

- mindestens einen Prozessor; und
- mindestens einen Speicher, der einen Computerprogrammcode umfasst, wobei der mindestens eine Speicher und der Computerprogrammcode konfiguriert sind, um gemeinsam mit dem mindestens einen Prozessor die Ausführung der Vorrichtung zu bewirken.

12. Computerprogramm, umfassend Programmcodeanweisungen, die, wenn sie von einem Computer ausgeführt werden, bewirken, dass der Computer die Schritte des Verfahrens nach einem der Ansprüche 1 bis 9 implementiert.

13. Plattform (PTF) zum Verwalten des Bereitstellens einer Infrastruktur einer Computerumgebung mittels Programmcodeanweisungen, umfassend eine Vorrichtung (100) zum Generieren einer Empfehlung für die Korrektur einer Konfiguration nach einem der Ansprüche 10 und 11.

14. Verwaltungsplattform nach dem vorstehenden Anspruch, **dadurch gekennzeichnet, dass** sie mindestens einen Speicher umfasst, der eine Datentabelle oder Wissensdatenbank (KDB) umfasst, die Einträge umfasst, wobei ein Eintrag mindestens einem Schlüsselwort zusätzliche Kontextinformationen zuordnet.

15. Verwaltungsplattform nach dem vorstehenden Anspruch, **dadurch gekennzeichnet, dass** der mindestens eine Speicher ferner mindestens eine Datentabelle (QDB#1, QDB#2) relativ zu einem Typ der Anomalie umfasst, wobei die Tabelle Beispiele von Anfragen zum Erhalten einer Korrekturempfehlung umfasst, die zum Erhalten von Korrekturempfehlungen (RECO, RECO') einer Anomalie des Typs geführt haben, die durch den Benutzer validiert wurden und einem Score zugeordnet sind, und dadurch, dass die Plattform ferner ein Verstärkungslernmodul umfasst, das konfiguriert ist, um mindestens ein Beispiel einer Anfrage zum Erhalten einer Korrekturempfehlung in einer Datentabelle (QDB#1, QDB#2) relativ zu einem Typ der Anomalie, in Abhängigkeit von dem Score, als Antwort auf eine Anfrage zum Erhalten zusätzlicher Kontextinformationen, die von der Vorrichtung (100) empfangen wurde, auszuwählen.

**Claims**

1. A method for generating a recommendation for correcting a configuration file of infrastructure of a computing environment of an enterprise within which services run, said infrastructure having been deployed automatically as code from said configuration file,
said method comprising:

- obtaining and storing (E1), in a memory, a runtime report (LOG) comprising a compliance anomaly detected in the configuration file (SCP), while said service is being run, by means of an anomaly detection tool;
- extracting (E2) attributes from the runtime report (LOG) in accordance with the specifications of a governance plan (GVP);
- obtaining (E4) context information specific to the anomaly, said context information comprising at least the runtime report (LOG);
- generating a request (REQ) to correct the anomaly from said attributes extracted from the runtime report LOG and the context information obtained, said request comprising at least one question which is formulated in natural language and into which said attributes and said context information have been inserted;
- presenting (E5) said anomaly correction request as input into a previously trained generative artificial intelligence model, said correction request comprising said question formulated in natural language and said anomaly context information, and obtaining (E6), as output, a recommendation (RECO) for correcting the configuration file;
- validating (E7) the recommendation for correcting the configuration file comprising determining a similarity measurement with respect to the source code of the configuration file (SCP) and comparing the similarity measurement with an acceptability threshold;
- when the similarity measurement is above the acceptability threshold, submitting (E8) the recommendation for correcting the configuration file for user evaluation.

2. The method according to the preceding claim, **characterized in that** generating the correction request (REQ) comprises generating (E50) a request (REQ1) to obtain said question from a pre-constructed standard question and said attributes, presenting said request as input into said artificial intelligence module during a first interaction with the artificial intelligence module and obtaining (E52) said question (REP1) as output from the module.

3. The method according to claim 2, **characterized in that** it comprises extracting (E3) keywords (KW) from said attributes of the runtime report (LOG) and obtaining (E4) context information comprises obtaining additional context information comprising one or more internal documents of the enterprise comprising guidelines for implementing the infrastructure as code, by querying at least one data table (KDB, QDB#1, QDB#2) comprising entries associating context information of the computing environment with at least one keyword.

4. The method according to claim 3, **characterized in that** the additional context information belongs to a group comprising at least:

   - the configuration file that generated the anomaly,
   - information on a security policy applicable to the computing environment,
   - one or more examples of previously obtained correction requests/recommendations.

5. The method according to claim 2, **characterized in that** obtaining additional context information comprises obtaining examples of requests to obtain a correction recommendation by querying a reinforcement learning module (RFL), said module being configured to select at least one example of a request to obtain a correction recommendation from a data table (QDB#1, QDB#2) relating to a type of anomaly, said table comprising examples of requests to obtain a correction recommendation that have resulted in obtaining recommendations (RECO, RECO') for correcting an anomaly of said type, validated by the user and associated with a score, on the basis of said score.

6. The method according to claim 1, **characterized in that** it comprises previously reading (E0) a document, or governance plan, comprising related information belonging to a group comprising:

   - information on the format of the runtime report,

- information on at least one attribute of the anomaly to be extracted from the runtime report,
- information on the similarity measurement and the acceptability threshold to be used to validate the recommendation for correcting the configuration file.

7. The method according to any of the preceding claims,
   **characterized in that** submitting (E8) the correction recommendation comprises a request for an update, or pull request, of the configuration file (SCP) in a source code management repository in accordance with the correction recommendation.

8. The method according to any of the preceding claims,
   **characterized in that** it comprises obtaining (E9) an evaluation outcome of the correction recommendation by a user, and, depending on the evaluation outcome obtained, triggering or not triggering an update (E11) of the configuration file (SCP) in accordance with the correction recommendation.

9. The method according to the preceding claim, **characterized in that** it comprises, in the event of triggering the update of the configuration file (E11), recording (E12) the request to obtain a recommendation and the correction recommendation as an example in a data table (QDB#1, QDB#2) relating to a type of anomaly, in association with a score.

10. A device for generating a recommendation for correcting a configuration file of infrastructure of a computing environment of an enterprise within which services run, said infrastructure having been deployed automatically as code from said configuration file,
    said device comprising means for:

   - obtaining and storing, in a memory, a runtime report (LOG) comprising a compliance anomaly detected in the configuration file (SCP), while said service is being run, by means of an anomaly detection tool;
   - extracting attributes from the runtime report (LOG) in accordance with the specifications of a governance plan (GVP);
   - obtaining context information specific to the anomaly, said context information comprising at least the runtime report (LOG);
   - generating a request (REQ) to correct the anomaly from said attributes extracted from the runtime report LOG and the context information obtained, said request comprising at least one question which is formulated in natural language and into which said attributes and said context information have been inserted;

- presenting said anomaly correction request as input into a previously trained generative artificial intelligence model, said correction request comprising a question formulated in natural language and anomaly context information, and obtaining, as output, a recommendation (RECO) for correcting the configuration file;
- validating the recommendation for correcting the configuration file comprising determining a similarity measurement with respect to the source code of the configuration file (SCP) and comparing said similarity measurement with an acceptability threshold;
- when the similarity measurement is above the acceptability threshold, submitting the recommendation for correcting the configuration file for user evaluation.

11. The device according to the preceding claim, **characterized in that** it comprises:

- at least one processor; and
- at least one memory comprising computer program code, the at least one memory and the computer program code being configured to, together with the at least one processor, cause said device to be run.

12. A computer program comprising program code instructions which, when they are run by computer, cause the steps of the method according to any of claims 1 to 9 to be implemented by the computer.

13. A platform (PTF) for managing the deployment of computing environment infrastructure using program code instructions, comprising a device (100) for generating a recommendation for correcting a configuration according to either of claims 10 and 11.

14. The management platform according to the preceding claim, **characterized in that** it comprises at least one memory comprising a data table or knowledge database (KDB) comprising entries, an entry associating additional context information with at least one keyword.

15. The management platform according to the preceding claim, **characterized in that** said at least one memory further comprises at least one data table (QDB#1, QDB#2) relating to a type of the anomaly, said table comprising examples of requests to obtain a correction recommendation that resulted in obtaining recommendations (RECO, RECO') for correcting an anomaly of said type, validated by the user and associated with a score, and **in that** the platform further comprises a reinforcement learning module configured to select at least one example of a request to obtain a correction recommendation from a data table (QDB#1, QDB#2) relating to a type of the anomaly, on the basis of said score, in response to a request to obtain additional context information received from said device (100).

**FIG. 1**

FIG. 2

**FIG. 3**

**FIG. 4**

**FIG. 5**

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2022156121 A1
- US 2023022222 A1
- WO 2022093239 A1
- US 2022308952 A1

**Littérature non-brevet citée dans la description**

- Machine Learning-Based Run-Time DevSecOps: ChatGPT Against Traditional Approach. **PETROVIĆ NENAD**. 2023 10TH INTERNATIONAL CONFERENCE ON ELECTRICAL, ELECTRONIC AND COMPUTING ENGINEERING (ICETRAN). IEEE, 05 June 2023, 1-5